# EUROPÄISCHE PATENTSCHRIFT

(11) **EP 2 654 119 B1**
(45) Veröffentlichungstag und Bekanntmachung des Hinweises auf die Patenterteilung: **19.11.2014**
(21) Anmeldenummer: 13162422.3
(22) Anmeldetag: 05.04.2013
(51) Int. Cl.: H01M 10/48

(54) **Überwachungsvorrichtung einer Traktionsbatterie eines Flurförderzeugs**
Monitoring device for a traction battery of an industrial truck
Dispositif de surveillance d'une batterie de traction d'un chariot de manutention

(30) Priorität: 18.04.2012 DE 102012103386
(43) Veröffentlichungstag der Anmeldung: 23.10.2013
(73) Patentinhaber: STILL GmbH, 22113 Hamburg (DE)
(72) Erfinder: Claus, Alexander, 22303 Hamburg (DE)
(74) Vertreter: Geirhos, Johann

(56) Entgegenhaltungen:
- EP-A1- 1 737 063
- EP-A1- 2 393 152
- WO-A2-2006/130614

## Beschreibung

Die Erfindung betrifft eine Überwachungsvorrichtung einer Traktionsbatterie eines Flurförderzeugs. Insbesondere betrifft die Erfindung eine Überwachungsvorrichtung einer Traktionsbatterie eines Flurförderzeugs, die zumindest eine ein Elektrolyt enthaltende Batteriezelle in einem Batterietrog aufweist, wobei die Überwachungsvorrichtung zumindest eine Elektrolytfüllstandanzeige für zumindest eine Batteriezelle aufweist.

Batterie-elektrisch angetriebene Flurförderzeuge, wie zum Beispiel Elektrogabelstapler, sind im Regelfall mit einem Batteriefach versehen, in das eine zur Energieversorgung dienende Traktionsbatterie eingesetzt werden kann. Die Traktionsbatterie ist dabei häufig eine Blei-Säurebatterie, die aus einem Batterietrog bestehend, in den mehrere einzelne Batteriezellen eingesetzt sind.

Solche Blei-Säurebatterien sind empfindlich gegenüber einem Absinken des Standes des Elektrolyts in einer oder mehreren Batteriezellen. Bekannt ist nach dem Stand der Technik, für die Überwachung eine oder mehrere Elektrolytfüllstandanzeigen für Batteriezellen vorzusehen, die in der oder den thermisch am stärksten belasteten Batteriezellen installiert werden. Diese Elektrolytfüllstandanzeigen erfassen den Stand des Elektrolyts und geben an der Traktionsbatterie oder einem Batteriekabel innerhalb des Batteriefachs optisch ein Lichtzeichen, das den ordnungsgemäßen Zustand, einen fehlerhaften Elektrolytstand bzw. eventuell einen Systemfehler des Elektrolytfüllstandanzeigers anzeigt. Dies kann von einer Bedienperson beispielsweise durch einen Blick in das Batteriefach überprüft werden. Bekannte Ausführungsformen von Elektrolytfüllstandanzeigen werden anstelle der Verschlussdeckel der Batteriezelle eingesetzt.

Nachteilig an diesem bekannten Stand der Technik ist, dass die Überprüfung davon abhängig ist, dass die Bedienperson diese letztlich auch durchführt. Die optischen Lichtzeichen über den Batteriezustand bzw. den Stand des Elektrolyts können von der Bedienperson ignoriert werden bzw., da ein extra Öffnen des Batteriefachs erforderlich ist, im Alltagsbetrieb wegen des zusätzlichen Zeitaufwands unterlassen werden.

Bei solchen Blei-Säurebatterien nach dem Stand der Technik sind weiterhin Wartungstätigkeiten erforderlich. Zu diesen Wartungstätigkeiten zählen eine Kriechstrommessung und eine Prüfung auf Vorhandensein von Flüssigkeiten im Batterietrog, unter anderem aufgrund Überlaufens oder Austretens von Säure bzw. Elektrolytflüssigkeit. Durch Säure bzw. Elektrolyt im Batterietrog kann dessen Lebensdauer verringert werden bzw. der Batterietrog der Traktionsbatterie durch Korrosion zerstört werden.

Üblicherweise werden diese Wartungstätigkeiten in regelmäßigen zeitlichen Abständen geplant vorgenommen. Bei einem erfassten, unzulässig hohen Kriechstrom muss beispielsweise die Oberfläche der Batteriezellen gereinigt werden und in dem Fall, dass Flüssigkeit in dem Batterietrog sich befindet, muss diese mit speziellen Vorrichtungen, wie hierfür vorgesehenen Pipetten, entnommen werden. Dies führt zu regelmäßigen Aufwand, der aber nicht in jedem Fall notwendig ist, wenn die Wartung nicht bedarfsorientiert erfolgt und je nach den Umständen eventuell noch gar nicht erforderlich ist.

Nachteilig ist, dass die geplante regelmäßige Wartung von einer Bedienperson möglicherweise ignoriert wird, insbesondere wenn bereits mehrfach bei einer nach Zeitplan stattfindenden Wartung sich diese als nicht erforderlich herausgestellt haben sollte. Dadurch ist eine Schädigung und vorzeitige Alterung der Batterie zu befürchten und es kann, beispielsweise durch zu hohe Kriechströme, Energie ungenutzt verloren gehen.

Die Verbindung zwischen Flurförderzeug und Traktionsbatterie erfolgt über ein Anschlusskabel der Traktionsbatterie, das einen Batteriesteckverbinder umfasst, der eine einfache und schnell lösbare Verbindung zu dem Flurförderzeug ermöglicht. Batteriesteckverbinder kommen in verschiedenen, im Wesentlichen von der übertragbaren Stromstärke bestimmten Ausführungen zum Einsatz. Neben den zwei Hauptkontakten können die Batteriesteckverbinder mit mehreren Hilfskontakten oder mit Verbindern für Luftdurchführungen, über die die Zuführung von Luft zu der Elektrolytflüssigkeit möglich ist, bestückt werden.

Aus der EP 1 737 063 A1 ist eine austauschbare Traktionsbatterie für ein Flurförderzeug mit mindestens einer Kabelverbindung zwischen dem Flurförderzeug und der austauschbaren Traktionsbatterie bekannt, bei der eine optische Anzeigevorrichtung zur Anzeige mindestens eines Zustandsparameters der Traktionsbatterie an dem Anschlusskabel zu einem Batteriesteckverbinder angeordnet ist. In einem Ausführungsbeispiel ist beschrieben, dass eine Elektronikeinheit den Elektrolytfüllstand und die Temperatur der Batterie erfasst und anzeigt.

Dieser Stand der Technik verhindert jedoch nicht, dass eine Warnanzeige durch eine Bedienperson nicht beachtet wird oder nicht kontrolliert wird, da diese sich an dem Anschlusskabel innerhalb des Batteriefaches befindet. Auch bietet dieser Stand der Technik keine Lösung für eine bedarfsorientierte Wartung im Hinblick auf die Kontrolle auf Flüssigkeit in einem Batterietrog und der Größe von Kriechströmen.

Der vorliegenden Erfindung liegt die Aufgabe zugrunde, eine verbesserte Überwachungsvorrichtung einer Traktionsbatterie eines Flurförderzeugs zur Verfügung zu stellen, mit der die oben genannten Nachteile vermieden werden können und insbesondere eine zuverlässige Überwachung der Traktionsbatterie sichergestellt werden kann.

Diese Aufgabe wird durch eine Überwachungsvorrichtung für eine Traktionsbatterie nach Anspruch 1, eine Traktionsbatterie nach Anspruch 5 und ein Flurförderzeug nach Anspruch 9 gelöst.

Die Aufgabe wird dadurch gelöst, dass bei einer Überwachungsvorrichtung einer Traktionsbatterie eines Flurförderzeugs, die zumindest eine ein Elektrolyt enthaltende Batteriezelle in einem Batterietrog aufweist, wobei die Überwachungsvorrichtung zumindest eine Elektrolytfüllstandanzeige für zumindest eine Batteriezelle aufweist und die Messergebnisse der Elektrolytfüllstandanzeige über einen Signalweg, insbesondere über eine Signalleitung, an das Flurförderzeug übertragen werden können. Vorteilhaft ist dabei eine Kriechstrommessung für zumindest eine Batteriezelle und/oder eine Flüssigkeitserfassungsvorrichtung des Batterietrogs und/oder eine Temperaturmessvorrichtung der mindestens einen Batteriezelle vorgesehen, wobei die Messergebnisse in einem zusammengefassten Signal enthalten sind. die Messergebnisse

Indem die Messergebnisse in einem Signal zusammengefasst werden, kann eine einfache Kommunikation mit einem Flurförderzeug oder einer sonstigen die Messergebnisse auswertenden Vorrichtung ermöglicht werden. Es ist beispielsweise nur eine physikalische Signalleitung als Signalweg erforderlich, wenn die Messergebnisse als ein Signal etwa in einem Datenbus codiert werden, aber auch wenn etwa ein Blinksignal, ein Dauersignal bzw. kein Signal unterschieden wird. Eine Kommunikationsverbindung über den Signalweg mit beispielsweise einem Flurförderzeug kann somit kostengünstig und unter Verwendung von Standardkomponenten erfolgen. Je nach Codierung können dabei ein einzelnes oder mehrere Signale, bzw. mehreren Messergebnisse, übertragen werden. Dabei können auch nur einige der Messergebnisse zu einem Signal zusammengefasst werden, aber umgekehrt auch weitere, erforderliche Messwerte einer Batterieüberwachung hinzugefügt werden. Ebenso ist es auch denkbar, jeweilige Einzelsignale zu übertragen, beispielsweise in einem zeitlichen Ablauf hintereinander, oder auch über einen Signalweg, der mehrere Signalleitungen aufweist.

Vorteilhaft können Informationen über den Signalweg, insbesondere ein zusätzliches Kabel oder ein mit einem Anschlusskabel der Traktionsbatterie verbundenes bzw. in dieses integriertes Kabel, übertragen werden und unverzüglich einer Bedienperson eines Flurförderzeugs angezeigt werden. Durch die Bedienperson kann am einfachsten und leichtesten ein fehlerhafter Zustand der Traktionsbatterie, der auf diese Weise der Bedienperson zur Kenntnis gebracht wird, abgestellt werden. Entsprechende Maßnahmen, um dies abzustellen, sind beispielsweise bei zu geringem Elektrolytstand, dass deionisiertes Wasser nachgefüllt wird. Durch die erfindungsgemäße Überwachungsvorrichtung ist es möglich, eine Überwachung zu ermöglichen, ohne dass eine Überprüfung innerhalb eines Batteriefachs erforderlich ist, sowie eine Wartung bedarfsorientiert durchzuführen. Die erfindungsgemäße Überwachungsvorrichtung kann unabhängig von einem Hersteller der Traktionsbatterie eingesetzt werden und insbesondere auch nachgerüstet werden, da sie als selbstständige Einheit hergestellt und verkauft werden kann. Es wird die Lebenserwartung der Traktionsbatterie und der hieraus resultierende Investitionsaufwand verringert.

Durch die Bedienperson kann am einfachsten und leichtesten der fehlerhafte Zustand der Traktionsbatterie, wenn unzulässig hohe Kriechströme auftreten, abgestellt werden. Hierzu wird die Oberfläche der Batteriezellen, insbesondere der Bereich der Polanschlüsse der Batteriezellen, gereinigt. Durch die erfindungsgemäße Überwachungsvorrichtung ist es möglich, eine Überwachung zu ermöglichen, ohne dass eine Überprüfung innerhalb eines Batteriefachs erforderlich ist, sowie eine Wartung bedarfsorientiert durchzuführen, so dass eine aufwändige Reinigung der Batterieoberfläche zur Verringerung der Kriechströmen weniger häufig vorgenommen werden muss, bzw. nur, wenn unzulässig hohe Kriechströme tatsächlich auftreten. Es wird vorteilhaft eine gleichzeitige Prüfung aller für die Wartung notwendiger Werte und Parameter ermöglicht. Dies optimiert den entsprechenden Aufwand und senkt die Wartungskosten. Die frühzeitige Erkennung von Kriechströmen führt auch zu einer Energieeinsparung, da unnötige Verluste vermieden werden.

Durch die Messergebnisse der Flüssigkeitserfassungsvorrichtung kann bedarfsorientiert angezeigt werden, wenn eine Bedienperson durch spezielle Vorrichtungen, insbesondere eine entsprechend ausgelegte Pipette, die Flüssigkeit aus dem Batterietrog entfernen muss. Auch das Entstehen einer Flüssigkeitsansammlung innerhalb des Batterietrogs durch die Überwachungsvorrichtung zusammen mit den übrigen Messwerten zu überprüfen, ist besonders vorteilhaft, da zum einen eine solche Flüssigkeitsansammlung ohne entsprechenden Sensor in einem mit Batteriezellen dicht gefüllten Batterietrog nicht ohne weiteres überprüft werden kann und zum anderen bei nicht beschädigten Batteriezellen und sorgfältiger Wartung nicht regelmäßig Flüssigkeit auftreten sollte.

Vorteilhaft umfasst der Signalweg eine Verbindung über Bluetooth, oder Datenfunk höherer Frequenz, oder WLAN, oder GPRS oder Infrarot.

Zugehörigen Komponenten für diese Datenverbindungen stehen als Standardbauteile kostengünstig zur Verfügung.

In einer Ausgestaltung der Erfindung können die Messergebnisse in einem pulsweitenmodulierten Signal enthalten sein.

Dies stellt eine einfache und im Verhältnis zu der erforderlichen Übertragungsrate zuverlässige Codierungsart dar, mit der auf einfache Weise mehrere Messsignale über einen Signalweg übertragen werden können.

In der günstigen Weiterbildung der Erfindung kann ein Energiemengenzähler vorgesehen sein, dessen Messergebnisse über den Signalweg übertragen werden können.

Durch den Energiemengenzähler entfällt das Erfordernis einer Parametrisierung bzw. Grundeinstellung eines Entladeanzeigers bei einem verbundenen Flurförderzeug auf die jeweilige Kapazität einer zugehörigen Traktionsbatterie. Dadurch ist ein Mischbetrieb des Flurförderzeugs mit verschiedenen Arten von Traktionsbatterien mit unterschiedlichen Betriebsgrenzen ohne Anpassung des verbundenen Flurförderzeugs möglich.

Die Aufgabe wird auch gelöst durch eine Traktionsbatterie mit mindestens einer Batteriezelle in einem Batterietrog, die eine zuvor beschriebene Überwachungsvorrichtung aufweist.

Die erfindungsgemäße Traktionsbatterie weist die bereits zuvor beschriebenen Vorteile auf.

In günstiger Ausführungsform ist bei mehreren Batteriezellen die Elektrolytfüllstandanzeige in einer mittleren Batteriezelle angeordnet.

Bei mehreren Batteriezellen kann die Kriechstrommessung an einer mittleren Batteriezelle angeordnet sein und gegenüber einem Potential des Batterietrogs und/oder gegenüber Polen der Batteriezellen messen.

Je mehr Batteriezellen auf Kriechströme gegenüber dem Batterietrog bzw. auf Potential gegenüber dem Batterietrog überprüft werden, umso größer ist die Wahrscheinlichkeit, unzulässig hohe Kriechströme oder Fehlerströme frühzeitig zu erkennen. Ebenso kann eine Überprüfung erfolgen, indem auf der Oberfläche der Batteriezellen gegenüber den Polanschlüssen gemessen wird.

Vorteilhaft weist ein Batteriesteckverbinder Zusatzkontakte auf und dienen die Zusatzkontakte als Signalweg.

Batteriesteckverbinder weisen in üblicher Ausführungsform als genormte Stecker bereits Zusatzkontakte bzw. Hilfskontakte auf. Dadurch kann eine funktionssichere und kostengünstige Möglichkeit für einen Signalweg zwischen Flurförderzeug und Traktionsbatterie bzw. Überwachungsvorrichtung der Traktionsbatterie zur Verfügung gestellt werden.

Die Aufgabe wird auch gelöst durch ein Flurförderzeug, das elektrisch angetrieben wird, mit einer Traktionsbatterie, wie sie zuvor beschrieben wurde.

Es kann über den Signalweg eine Verbindung zu einer Steuerung des Flurförderzeugs bestehen.

In der Steuerung des Flurförderzeugs können ein zusammengefasstes Signal oder mehrere Einzelsignale der Überwachungsvorrichtung auf einfache und kostengünstige Art und Weise, insbesondere rein durch Software, ausgewertet werden. Dies kann beispielsweise erfolgen, wenn das gemeinsame Signal der Überwachungsvorrichtung ein Signal eines Datenbusses oder ein Pulsbreiten codiertes Signal ist. In der Steuerung kann beispielsweise auch das Signal eines Energiemengenmessers ausgewertet werden und mit dessen Hilfe eine Reichweitenabschätzung auf Grundlage vorherige Energieentnahmemengen durchgeführt werden. Dies ist auch möglich, wenn die Traktionsbatterie nicht vollständig geladen wurde.

In einer Weiterbildung der Erfindung kann ein Wartungsbedarf der Traktionsbatterie durch eine akustische Signalvorrichtung und/oder in einer Anzeigevorrichtung des Flurförderzeugs angezeigt werden.

Beispielsweise kann in dem Fall, dass die Traktionsbatterie sich in einem guten Zustand befindet und keinerlei Wartung erforderlich ist, kein Signal oder keine entsprechende Meldung auf der Anzeigevorrichtung erfolgen, die beispielsweise ein Display für die Bedienperson bzw. den Fahrer sein kann. Im Fall, dass eine Wartung erforderlich ist, wird dies der Bedienperson angezeigt. Es ist auch möglich, beispielsweise eine Beleuchtung oder eine Rundumkennleuchte des Flurförderzeugs und/oder ein Hupensignal einzuschalten, wodurch auch dritte Personen, wie ein Fuhrparkleiter, wahrnehmen können, dass ein Wartungsbedarf bei diesem Flurförderzeug besteht. Dies kann auch erst nach einer gewissen zeitlichen Verzögerung oder nach einem mehrfachen Ignorieren des Wartungsbedarfs und mehrfacher Inbetriebnahme des Flurförderzeugs erfolgen.

Es können bei angezeigtem Wartungsbedarf nach Ablauf einer Toleranzzeit Funktionen des Flurförderzeugs, insbesondere Funktionen einer Lasthandhabungsvorrichtung und/oder eine Fahrgeschwindigkeit des Flurförderzeugs, beschränkt werden.

Dadurch ist es möglich, abgestuft im Falle eines Ignorierens des Hinweises auf Wartungsbedarf, die Funktionen des Flurförderzeugs so einzuschränken, so dass eine Bedienperson dazu angehalten wird, die Wartungsarbeiten durchzuführen. Im Falle, dass es sich bei dem Flurförderzeug um einen Gabelstapler, oder allgemein ein solches mit einer Hubfunktion handelt, kann beispielsweise die Hubfunktion abgeschaltet werden.

Die Steuerung des Flurförderzeugs kann einen Wartungsbedarf an ein externes Flottenverwaltungssystem melden.

Dies kann erfolgen, um grundsätzlich eine Verwaltung der durchgeführten Wartungen zu ermöglichen, aber auch, um im Fall dass eine Wartung nicht erfolgt, dies erfassen zu können.

Weitere Vorteile und Einzelheiten der Erfindung werden anhand des in den schematischen Figuren dargestellten Ausführungsbeispiels näher erläutert. Hierbei zeigt
- Fig. 1: in einer Perspektivansicht eine erfindungsgemäße Traktionsbatterie und
- Fig. 2: einen Batteriesteckverbinder der Traktionsbatterie der Fig. 1.

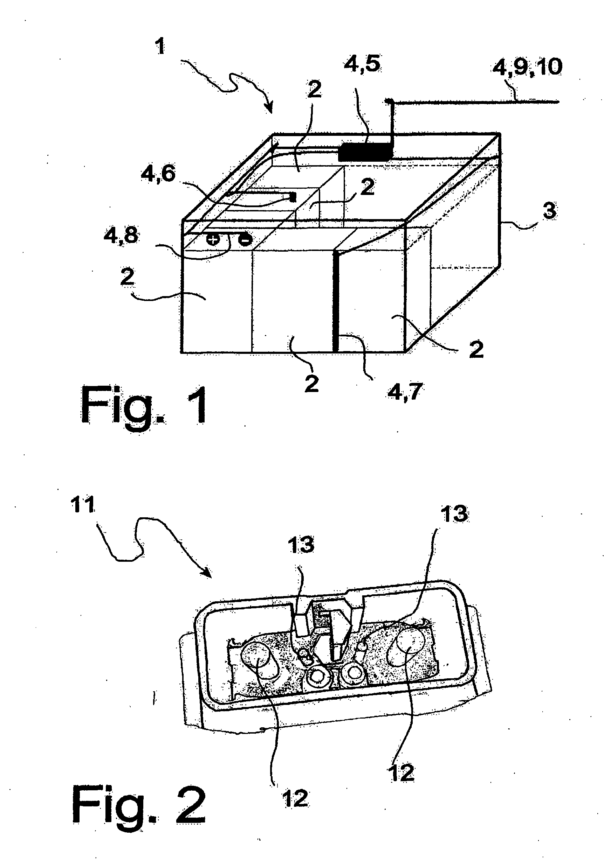

Die Fig. 1 zeigt in einer Perspektivansicht eine erfindungsgemäße Traktionsbatterie 1, die aus mehreren Batteriezellen 2 aufgebaut ist, die in einem Batterietrog 3 angeordnet sind. Die Traktionsbatterie 1 weist eine Überwachungsvorrichtung 4 auf, die eine Steuerungseinheit 5, eine Elektrolytfüllstandanzeige 6 einer Batteriezelle 2, eine Flüssigkeitserfassungsvorrichtung 7 des Batterietrogs 3 sowie eine Kriechstrommessung 8 umfasst. Als Signalweg 9 der Überwachungsvorrichtung 4 dient ein Signalkabel 10, das mit einem in der Fig. 1 nicht dargestellten Batteriesteckverbinder und dessen Zusatzkontakten verbunden ist.

Die Fig. 2 zeigt einen Batteriesteckverbinder 11 der Traktionsbatterie 1 der Fig. 1 mit den Hauptkontakten 12. Über Zusatzkontakte 13 kann die Überwachungsvorrichtung 4 ein Signal an eine hier nicht dargestellte Fahrzeugsteuerung eines Flurförderzeugs übertragen.

Während des Betriebs der Traktionsbatterie 1 bildet die Steuerungseinheit 5 der Überwachungsvorrichtung 4 ein Signal, wenn die Elektrolytfüllstandanzeige 6, die Flüssigkeitserfassungsvorrichtung 7 oder die Kriechstrommessung 8 einen nicht ordnungsgemäßen Zustand der Traktionsbatterie 1 anzeigen. Durch eine Anzeige in dem Flurförderzeug wird hierauf die Bedienperson auf eine erforderliche Wartung der Traktionsbatterie 1 hingewiesen. Dadurch muss beispielsweise eine Reinigung der Oberflächen der Batteriezellen 2 zur Verminderung eines Kriechstroms nur im Bedarfsfall erfolgen und nicht nach einem Zeitplan.

## Patentansprüche

1. Überwachungsvorrichtung einer Traktionsbatterie (1) eines Flurförderzeugs, die zumindest eine ein Elektrolyt enthaltende Batteriezelle (2) in einem Batterietrog (3) aufweist, wobei die Überwachungsvorrichtung (4) zumindest eine Elektrolytfüllstandanzeige (6) für zumindest eine Batteriezelle (2) aufweist, **dadurch gekennzeichnet,**
**dass** die Messergebnisse der Elektrolytfüllstandanzeige (6) über einen Signalweg (9), insbesondere über eine Signalleitung (10), an das Flurförderzeug übertragen werden können und
weiterhin mindestens
eine Kriechstrommessung (8) für zumindest eine Batteriezelle (2) und/oder
eine Flüssigkeitserfassungsvorrichtung (7) des Batterietrogs (3) und/oder
eine Temperaturmessvorrichtung der mindestens einen Batteriezelle (2) vorgesehen sind,
deren Messergebnisse über den Signalweg (9) übertragen werden können, wobei die Messergebnisse in einem zusammengefassten Signal enthalten sind.

2. Überwachungsvorrichtung nach Anspruch 1,
**dadurch gekennzeichnet,**
**dass** die Messergebnisse in einem pulsweitenmodulierten Signal enthalten sind.

3. Überwachungsvorrichtung nach Anspruch 1 oder 2,
**dadurch gekennzeichnet,**
**dass** der Signalweg eine Verbindung über Bluetooth, oder Datenfunk höherer Frequenz, oder WLAN, oder GPRS oder Infrarot umfasst.

4. Überwachungsvorrichtung nach einem der Ansprüche 1 bis 3,
**dadurch gekennzeichnet,**
**dass** ein Energiemengenzähler vorgesehen ist, dessen Messergebnisse über den Signalweg übertragen werden können.

5. Traktionsbatterie mit einer Überwachungsvorrichtung (4) nach einem der vorhergehenden Ansprüche, mit mindestens einer Batteriezelle (2) in einem Batterietrog (3).

6. Traktionsbatterie nach Anspruch 5,
**dadurch gekennzeichnet,**
**dass** bei mehreren Batteriezellen (2) die Elektrolytfüllstandanzeige (6) in einer mittleren Batteriezelle (2) angeordnet ist.

7. Traktionsbatterie nach Anspruch 5 oder 6,
**dadurch gekennzeichnet,**
**dass** bei mehreren Batteriezellen (2) die Kriechstrommessung (8) an einer mittleren Batteriezelle (2) angeordnet ist und gegenüber einem Potential des Batterietrogs (3) und/oder gegenüber Polen der Batteriezellen (2) messen kann.

8. Traktionsbatterie nach einem der Ansprüche 5 bis 7,
**dadurch gekennzeichnet,**
**dass** ein Batteriesteckverbinder (11) Zusatzkontakte (13) aufweist und die Zusatzkontakte (13) als Signalweg (9) dienen.

9. Flurförderzeug, das elektrisch angetrieben wird, mit einer Traktionsbatterie (1) nach einem der Ansprüche 5 bis 8.

10. Flurförderzeug nach Anspruch 9,
**dadurch gekennzeichnet,**
**dass** über den Signalweg (9) eine Verbindung zu einer Steuerung des Flurförderzeugs besteht.

11. Flurförderzeug nach Anspruch 10,
**dadurch gekennzeichnet,**
**dass** ein Wartungsbedarf der Traktionsbatterie (1) durch eine akustische Signalvorrichtung und/oder in einer Anzeigevorrichtung des Flurförderzeugs angezeigt werden kann.

12. Flurförderzeug nach Anspruch 11,
**dadurch gekennzeichnet,**
**dass** bei angezeigten Wartungsbedarf nach Ablauf einer Toleranzzeit Funktionen des Flurförderzeugs, insbesondere Funktionen einer Lasthandhabungsvorrichtung und/oder eine Fahrgeschwindigkeit des Flurförderzeugs, beschränkt werden können.

13. Flurförderzeug nach Anspruch 11 oder 12,
**dadurch gekennzeichnet,**
**dass** die Steuerung des Flurförderzeugs einen Wartungsbedarf an ein externes Flottenverwaltungssystem melden kann.

## Claims

1. Monitoring device for a traction battery (1) of an industrial truck, which has at least one battery cell (2) containing an electrolyte, in a battery container (3), wherein the monitoring device (4) has at least one electrolyte filling level display (6) for at least one battery cell (2), **characterized**
**in that**
the measurement results of the electrolyte filling level display (6) can be transmitted to the industrial truck via a signal path (9), in particular via a signal line (10), and furthermore at least one creepage current
measurement means (8) for at least one battery cell (2) is provided, and/or
one liquid-detection device (7) of the battery container (3) is provided, and/or
a temperature-measuring device of the at least one battery cell (2) is provided,
the measurement results of which can be transmitted via the signal path (9), wherein the measurement results are contained in a combined signal.

2. Monitoring device according to Claim 1, **characterized**
**in that** the measurement results are contained in a pulse-width-modulated signal.

3. Monitoring device according to Claim 1 or 2, **characterized**
**in that** the signal path comprises a connection via Bluetooth or data radio with a relatively high frequency, or WLAN or GPRS or infra red.

4. Monitoring device according to one of Claims 1 to 3,
**characterized**
**in that** an energy quantity meter is provided whose measurement results can be transmitted via the signal path.

5. Traction battery having a monitoring device (4) according to one of the preceding claims, having at least one battery cell (2) in a battery container (3).

6. Traction battery according to Claim 5, **characterized**
**in that** when there are a plurality of battery cells (2) the electrolyte filling level display (6) is arranged in a central battery cell.

7. Traction battery according to Claim 5 or 6, **characterized**
**in that** when there are a plurality of battery cells (2) the creepage current measurement means (8) is arranged on a central battery cell (2) and can measure with respect to a potential of the battery container (3) and/or with respect to poles of the battery cells (2).

8. Traction battery according to one of Claims 5 to 7,
**characterized**
**in that** a battery plug-type connector (11) has additional contacts (13), and the additional contacts (13) serve as a signal path (9).

9. Industrial truck which is driven electrically, having a traction battery (1) according to one of Claims 5 to 8.

10. Industrial truck according to Claim 9, **characterized**
**in that** there is a connection to a controller of the industrial truck via the signal path (9).

11. Industrial truck according to Claim 10, **characterized**
**in that** a maintenance requirement of the traction battery (1) can be indicated by means of an acoustic signal device and/or in a display device of the industrial truck.

12. Industrial truck according to Claim 11, **characterized**
**in that** when a maintenance requirement is indicated, functions of the industrial truck, in particular functions of a load-handling device and/or a velocity of the industrial truck, can be limited after the expiry of a tolerance time.

13. Industrial truck according to Claim 11 or 12, **characterized**
**in that** the controller of the industrial truck can signal a maintenance requirement to an external fleet administration system.

## Revendications

1. Dispositif de surveillance de batterie de traction (1) d'un chariot de manutention comportant au moins une cellule de batterie (2) contenant un électrolyte dans un coffre de batterie (3), le dispositif de surveillance (4) comportant au moins un affichage d'état de remplissage d'électrolyte (6) pour au moins une cellule de batterie (2) :
**caractérisé en ce que** :
les résultats de mesure de l'affichage d'état de remplissage d'électrolyte (6) peuvent être transmis au chariot de manutention via une voie de transmission de signal (9), notamment via un câble de transmission de signal (10) ; et
qu'il est en outre au moins prévu :
une mesure de courant de fuite (8) pour au moins une cellule de batterie (2) ; et/ou
un dispositif de détection de liquide (7) du coffre de batterie (3) ; et/ou
un dispositif de mesure de température de l'au moins une cellule de batterie (2) ;
dont les résultats de mesure peuvent être transmis via la voie de transmission de signal (9), les résultats de mesure étant contenus dans un signal résumé.

2. Dispositif de surveillance selon la revendication 1, **caractérisé en ce que** les résultats de mesure sont contenus dans un signal de largeur d'impulsion modulée.

3. Dispositif de surveillance selon la revendication 1 ou 2, **caractérisé en ce que** la voie de transmission de signal comprend une liaison par Bluetooth, ou réseau de données de fréquence supérieure ou WLAN, ou GPRS ou infrarouge.

4. Dispositif de surveillance selon l'une quelconque des revendications 1 à 3, **caractérisé en ce qu'**un compteur de quantité d'énergie est prévu dont les résultats de mesure peuvent être transmis via la voie de transmission de signal.

5. Batterie de traction dotée d'un dispositif de surveillance (4) selon l'une quelconque des revendications précédentes, avec au moins une cellule de batterie (2) contenue dans un coffre de batterie (3).

6. Batterie de traction selon la revendication 5, **caractérisée en ce qu'**en présence de plusieurs cellules de batterie (2), l'affichage d'état de remplissage d'électrolyte (6) est disposé dans une cellule de batterie (2) centrale.

7. Batterie de traction selon la revendication 5 ou 6, **caractérisée en ce qu'**en présence de plusieurs cellules de batterie (2), la mesure de courant de fuite (8) est disposée au niveau d'une cellule de batterie (2) centrale et que la mesure peut être effectuée par rapport à un potentiel du coffre de batterie (3) et/ou par rapport aux pôles des cellules de batterie (2).

8. Batterie de traction selon l'une quelconque des revendications 5 à 7, **caractérisée en ce qu'**un connecteur de batterie (11) enfichable comporte des contacts supplémentaires (13) et que les contacts supplémentaires (13) servent de voie de transmission de signal (9).

9. Chariot de manutention entraîné électriquement par le biais d'une batterie de traction (1) selon l'une quelconque des revendications 5 à 8.

10. Chariot de manutention selon la revendication 9, **caractérisé en ce qu'**une liaison avec un élément de commande du chariot de manutention se produit via la voie de transmission de signal (9).

11. Chariot de manutention selon la revendication 10, **caractérisé en ce qu'**un besoin d'entretien de la batterie de traction (1) peut être affiché par le biais d'un dispositif de signal acoustique et/ou sur un dispositif d'affichage du chariot de manutention.

12. Chariot de manutention selon la revendication 11, **caractérisé en ce qu'**en cas de besoin d'entretien affiché, certaines fonctions du chariot de manutention, notamment les fonctions d'un dispositif de manipulation de charge et/ou une vitesse de conduite du chariot de manutention, peuvent être limitées après écoulement d'une certaine durée de tolérance.

13. Chariot de manutention selon la revendication 11 ou 12, **caractérisé en ce que** l'élément de commande du chariot de manutention peut annoncer un besoin d'entretien à un système de gestion de flotte externe.
